# EUROPÄISCHE PATENTANMELDUNG

(11) **EP 2 564 927 A1**
(43) Veröffentlichungstag der Anmeldung: **06.03.2013**
(21) Anmeldenummer: 11179997.9
(22) Anmeldetag: 05.09.2011
(51) Int. Cl.: B01L 99/00, B65B 1/36, G01F 11/14, G01N 1/28, G01N 35/10

(54) **Vorrichtung zur Befüllung von Probengefässen**

(71) Anmelder: Mettler-Toledo AG, 8606 Greifensee (CH)
(72) Erfinder: Zambonin, Roland, 8320 Fehraltdorf (CH); Pfister, Iris, 8052 Zürich (CH); Crevatin, Mario, 8409 Winterthur (CH); Häberling, Marc, 8909 Zwilikon (CH)

(57) **Zusammenfassung**

Vorrichtung zur Befüllung von Probengefässen für die Thermoanalyse mit einer Substanz, umfassend ein Grundelement (1, 401, 501); ein Abstreifelement (13, 113, 413, 513) mit einer Öffnung; ein Positionierelement (7, 207, 307, 407, 507) mit einer planare Abstreiffläche (11, 411, 511) und mindestens zwei Durchführungen (8, 408, 508); wobei im betriebsbereiten Zustand die Durchführungen (8, 408, 508) jeweils ein Probengefäss (21, 521) im Wesentlichen spaltfrei umschliessen und die Abstreiffläche (11, 411, 511) und die Oberkante jedes Probengefässes (21, 521) im Wesentlichen in einer gemeinsamen horizontalen Ebene angeordnet sind; wobei im betriebsbereiten Zustand durch eine Bewegung des Abstreifelements (13, 113, 413, 513) in Relation zum Positionierelement (7, 207, 307, 407, 507) die Öffnung des mindestens einen Probengefässes (21, 521) mit der Öffnung (15, 115, 415, 515) im Abstreifelement (13, 113, 413, 513) in Deckung gebracht wird, und dass die Öffnung (15, 115, 415, 515) im Abstreifelement (13, 113, 413, 513) überstehende Substanz eines befüllten Probengefässes (21, 521) bei der weiteren Bewegung über die Öffnung des Probengefässes (21, 521) und die Abstreiffläche (11, 411, 511) abstreift.

## Beschreibung

Die Erfindung betrifft eine Vorrichtung zur Befüllung von Probengefässen für die Thermoanalyse, insbesondere für die Verwendung in thermoanalytischen Messgeräten.

Im Bereich der Laboranalytik gibt es eine Vielzahl von Analysegeräten und Verfahren, welche es erfordern, dass eine Probe unter vorgegebenen Kriterien in ein geeignetes Probengefäss abgefüllt und mit dem Probengefäss in ein Messgerät eingebracht wird. Die verwendeten Probengefässe sind häufig für das entsprechende Messverfahren und/oder Messgerät spezifiziert und standardisiert.

Beispiele für derartige Messgeräte stellen thermoanalytische Messgeräte. Thermoanalytische Geräte dienen dazu verschiedene Charakteristika und Eigenschaften einer Probe oder Substanz zu bestimmen, welche Temperaturänderungen und/oder einem vorgegebenen Temperaturprogramm unterworfen wird. Thermoanalytische Messungen umfassen beispielsweise die Bestimmung des Erweichungs- oder Tropfpunktes, thermogravimetrische Messungen und DSC-Messungen (Dynamic Scanning Calorimetry). Den Verfahren gemeinsam ist es, dass die zu untersuchende Probe oder Substanz vor der Messung in ein geeignetes Probengefäss abgefüllt wird und in diesem analysiert wird. Diese Probengefässe sind recht klein und fassen Volumina von wenigen Millilitern, für Tropfpunktanalysen werden beispielsweise Probengefässe mit ca. 2 ml Volumen verwendet.

Der Begriff "Probengefäss" wird hier vor allem für Gefässe verwendet, welche in Messgeräten für die instrumentelle Analyse und insbesondere in thermoanalytischen Messgeräten eingesetzt werden.

Der Tropfpunkt ist eine charakteristische Stoffeigenschaft und beschreibt die Temperatur, bei der der erste Tropfen einer schmelzenden Substanz unter definierten Prüfbedingungen von der Probe abfällt. Die Bestimmung des Tropfpunkts erfolgt meist normkonform, beispielsweise gemäss einer der gängigen Normen, wie beispielsweise ASTM D3954, Ph. Eur. 2.2.17 (Pharmacopoea Europaea), AOCS Cc 18-18 (American Oil Chemists' Society).

Der Erweichungspunkt ist die Temperatur, bei der eine Probe oder Substanz unter definierten Prüfbedingungen eine vorgegebene Distanz durch Fliessen zurückgelegt hat. Die Bestimmung des Erweichungspunkts erfolgt meist normkonform, beispielsweise gemäss einer der gängigen Normen, wie beispielsweise ASTM D3104, D3461 und D6090 sowie DIN 51920. Zu den verwendeten Methoden zählt beispielsweise das sogenannte Ring-und-Kugel-Verfahren, bei welchem eine Kugel auf einen mit der zu analysierenden Substanz gefüllten Ring aufgelegt wird und die Temperatur bestimmt wird, bei der die Substanz so weich geworden ist, dass die Kugel eine vorbestimmte Strecke eingesunken ist. Weiterhin ist es möglich direkt die zurückgelegte Distanz der fliessenden Substanz oder zu ermitteln bei welcher Temperatur ein Tropfen der Substanz eine vorgegebene Länge überschreitet.

Die zu untersuchenden Proben können flüssig oder fest sein sowie einen Zwischenzustand aufweisen. Beispielhaft können die Proben als flüssig, fest, wachsartig, bituminös, zähflüssig oder pulverförmig beschrieben werden.

Insbesondere die manuelle Abfüllung kleiner Probemengen erfordert eine ruhige Hand und viel Geduld. Zudem ist es schwierig in jedes Probengefäss immer dieselbe Substanzmenge und/oder dasselbe Substanzvolumen, einzufüllen. Dieses kann insbesondere für Vergleichsmessungen von Bedeutung sein, da diese Füllparameter einen direkten Einfluss auf das Messergebnis haben können. Der manuelle Befüllungsprozess ist zudem zeitintensiv. Ein weiterer Nachteil der manuellen Einzel-Befüllung ist, dass der Verbrauch an Probensubstanz aufgrund versehentlich verschütteter Substanz verhältnismässig hoch ist. Ein unabsichtliches Verschütten der Substanz kann, ebenso wie der Befüllungsprozess selbst, zu einer versehentlichen Kontamination oder zu einem versehentlichen Kontakt des Benutzer und/oder der Umgebung mit der Substanz führen, was insbesondere bei toxischen, leicht entzündlichen oder anderweitig aggressiven Substanzen vermieden werden sollte.

Die manuelle Einzel-Befüllung der Probengefässe für die Tropf- bzw. Erweichungspunkt-Bestimmung wird zusätzlich dadurch erschwert, dass diese Probengefässe im Wesentlichen trichterförmig ausgestaltet sind und sowohl eine Einlass- als auch eine Auslass-Öffnung aufweisen. Zum Befüllen sollte daher der Auslass verschlossen werden, indem dieser z.B. auf eine ebene Unterlage gestellt wird. Probengefässe für den Einsatz in anderen thermoanalytischen Messgeräten können auch nur eine Einlass-Öffnung aufweisen.

Eine bereits bekannte Möglichkeit zur vereinfachten Befüllung der Probengefässe besteht darin, dieses in ein Werkstück mit passenden Bohrungen einzusetzen oder einzuspannen. Auf diese Weise ist es möglich mehrere Probengefässe mit derselben Substanz zu befüllen. Nachteilig an der bekannten Lösung ist jedoch, dass nach der Befüllung die Probengefässe umständlich aus den Bohrungen entfernt und anschliessend aussen von überstehender und/oder anhaftender Substanz gereinigt werden müssen.

Eine Lösung, welche die Befüllung mehrerer Probengefässe, vorzugsweise gleichförmig und normkonform, und zudem eine einfache Handhabung und Reinigung ermöglicht, gibt es zurzeit nicht. Daher liegt die Aufgabe dieser Erfindung darin, eine entsprechende Vorrichtung bereitzustellen.

Gelöst wird diese Aufgabe durch eine Vorrichtung zur Befüllung von Probengefässen für die Thermoanalyse mit einer zu analysierenden Substanz. Die Vorrichtung zur Befüllung umfasst ein Grundelement mit mindestens zwei Aufnahmen für je ein Probengefäss mit mindestens einer Befüllöffnung, ein Abstreifelement mit mindestens einer Öffnung und ein Positionierelement mit einer planaren bzw. ebenen Abstreiffläche und mindestes zwei Durchführungen. Das Positionierelement ist zwischen dem Grundelement und dem Abstreifelement angeordnet. Im betriebsbereiten Zustand umschliessen die Durchführungen im Wesentlichen spaltfrei jeweils ein Probengefäss und die Oberkanten der Probengefässe sind im Wesentlichen in einer gemeinsamen horizontalen Ebene mit der Abstreiffläche angeordnet. Im betriebsbereiten Zustand ist die Vorrichtung zur Befüllung von Probengefässen derart ausgestaltet, dass durch eine Bewegung des Abstreifelements in Relation zum Positionierelement die Befüllöffnung mindestens eines Probengefässes mit der Öffnung im Abstreifelement in Deckung gebracht und das Probengefäss gefüllt werden kann. Anschliessend kann die Öffnung im Abstreifelement bei einer Weiterführung der Bewegung über die Abstreiffläche und die Befüllöffnung des Probengefässes überstehende Substanz abstreifen.

Als "überstehend" wird hier Substanz bezeichnet, welche über den Rand des gefüllten Probengefässes herausragt und somit zum Beispiel ein gehäuft gefülltes Probengefäss bezeichnet. "Randvoll" oder "gestrichen voll" ist ein Probengefäss hingegen, wenn im gefüllten Zustand die Oberfläche der Substanz im Wesentlichen eine Ebene mit dem oberen Rand bzw. der Oberkante des Probengefässes bildet.

Vorteilhaft an dieser Ausführung ist, dass die Probengefässe im Positionierelement geführt sind und von diesem beim Befüllen und Abstreifen in Position gehalten werden. Durch die Anordnung der Oberkanten der Probengefässe und der Abstreiffläche in derselben Ebene, können die gefüllten Probengefässe sehr einfach glatt abgestreift werden. Die im Wesentlichen spaltfreie Anordnung der Probengefässe im Positionierelement sorgt zudem dafür, dass im Wesentlichen keine Substanz aussen am Probengefäss herabfliessen und/oder sich anlagern kann, da die Abstreiffläche die Probengefässe, insbesondere deren Oberkanten, bündig umschliesst. Zum Befüllen weist jedes Probengefäss eine Befüllungsöffnung auf.

Zudem ermöglichen die gegeneinander beweglichen Teile der Vorrichtung, genauer die Bewegung des Abstreifelements in Relation zum Positionierelement und zum Grundelement, dass zuviel eingefüllte Substanz einfach abgestreift werden kann, so dass das Probengefäss gestrichen voll gefüllt werden kann. Zudem lässt sich die Vorrichtung aufgrund ihres modularen Aufbaus leicht reinigen.

In einem bevorzugten Ausführungsbeispiel weist die Vorrichtung zudem ein erstes Einrastmittel, welches mindestens einer der Durchführungen im Positionierelement zugeordnet ist, und das Abstreifmittel ein zweites Einrastmittel auf. Das zweite Einrastmittel rastet bei der Bewegung des Abstreifelements in Relation zum Positionierelement in eines der ersten Einrastmittel ein, wodurch im betriebsbereiten Zustand mindestens ein Probengefäss zur Befüllung mit der Öffnung im Abstreifelement in Deckung gebracht wird. Überstehende Substanz eines befüllten Probengefässes wird von der Öffnung im Abstreifelements bei der Bewegung über die Öffnung des Probengefässes und die Abstreiffläche abgestreift.

In einem bevorzugten Ausführungsbeispiel ist jeder Durchführung im Positionierelement ein erstes Einrastmittel zugeordnet, so dass jedes Probengefäss individuell mit der Öffnung im Abstreifelement in Deckung gebracht werden kann, so dass jedes Probengefäss individuell befüllt werden kann.

Auf diese Weise kann jedes Probengefäss einzeln mit einer Substanz befüllt und abgestreift werden. Vorzugsweise werden alle Probengefässe der Vorrichtung mit derselben Substanz gefüllt, wobei es auch möglich ist das Abstreifelement zu entfernen, zu reinigen und eines oder mehrere Probengefässe mit einer weiteren Substanz zu füllen. Da für viele der vorangehend erwähnten thermoanalytischen Verfahren die Analyse von mindestens zwei Vergleichsproben vorteilhaft ist, ist die Befüllung mehrerer Probengefässe mit derselben Substanz zu bevorzugen.

In einem weiteren Ausführungsbeispiel ist das zweite Einrastmittel derart ausgestaltet, dass durch Einwirken einer zusätzlichen Kraft das Positionierelement mechanisch an das Abstreifelement angekoppelt werden kann. Dazu kann das zweite Einrastmittel ein Federelement, beispielsweise eine Blattfeder, aufweisen. Eine derartige Ausgestaltung ist vorteilhaft, da so das Positionierelement gemeinsam mit dem Abstreifelement einfach entfernt werden kann, wenn die Probengefässe gefüllt sind. Das Positionierelement wird vom Abstreifelement wieder abgekoppelt sobald keine zusätzliche Kraft mehr wirkt.

In einem weiteren Ausführungsbeispiel weist das Positionierelement mindestens ein drittes Einrastmittel auf, welches zwischen zwei ersten Einrastmitteln angeordnet ist, wobei beim Einrasten des dritten und zweiten Einrastmittels eine Neutralstellung eingestellt wird. Die Neutralstellung bezeichnet eine Stellung, an der die Öffnung im Abstreifelement in Deckung mit der Abstreiffläche und nicht mit einer Befüllöffnung des Probengefässes ist. Durch das dritte Einrastmittel wird aus der Bewegung des Abstreifelements eine schrittweise Bewegung. Zunächst wird die Öffnung des Abstreifelements in die Neutralstellung gebracht, das zweite Einrastmittel rastet dabei in eines der dritten Einrastmittel ein. Anschliessend wird die Öffnung mit einem leeren Probengefäss, genauer dessen Befüllöffnung, in Deckung gebracht, das zweite Einrastmittel greift in ein erstes ein, und das Probengefäss kann befüllt werden. Eine Weiterführung der Bewegung des Abstreifelements führt dessen Öffnung über das befüllte Probengefäss und die Abstreiffläche, so dass überstehende Substanz abgestreift wird und das Probengefäss randvoll gefüllt ist. Abschliessend rastet das zweite Einrastmittel in ein weiteres drittes Einrastmittel ein und das Abstreifelement befindet sich wieder in der Neutralstellung in Relation zum Positionierelement und zum Grundelement. In der Neutralstellung kann z. B. eine Substanz im Abstreifelement bereitgestellt werden oder auch das Abstreifelement entfernt werden.

Weiterhin kann das Abstreifelement eine Vertiefung für die einzufüllende und zu analysierende Substanz umfassen. Diese ist vorteilhaft, da die zu analysierende Substanz direkt in der Vertiefung bereitgestellt werden und so einfach und direkt in die Probengefässe überführt werden kann.

Vorzugsweise sind alle Bauteile der Vorrichtung und insbesondere die, welche beim Befüll-Vorgang mit der Substanz in Kontakt kommen, aus einem chemisch resistenten Material gefertigt und/oder deren Oberflächen sind mit einer chemisch resistenten und vorzugsweise glatten Beschichtung versehen. Das verwendete Material kann metallisch sein oder einen technischen Kunststoff umfassen und insbesondere aus Aluminium oder einer Aluminiumverbindung bestehen. Als Beschichtung können metallische, polymere und/oder keramische Materialien oder Mischungen daraus verwendet werden. Auf diese Weise kann verhindert werden, dass die zu analysierende Substanz das Material angreift und schädigt. Zudem lässt sich die Vorrichtung dann besonders einfach reinigen.

Das Positionierelement kann eine Positionierhilfe aufweisen, welche die korrekte Positionierung des Positionierelements auf den Probengefässen erleichtert und zudem einen Abstand zwischen Positionierelement und Grundelement herstellen kann. Die Positionierhilfe ist so ausgestaltet, dass es das Positionierelement auf den Probengefässen, genauer die Durchführungen, auf einem umlaufenden Absatz an einem Ende der Probengefässe, drückt und/oder hält. Auf diese Weise kann die im Wesentlichen spaltfreie und dichte Anordnung zwischen Durchführung und Probengefäss ermöglicht werden.

Vorzugsweise liegt das Positionierelement auf jeweils einem umlaufenden Rand der darin angeordneten Probengefässen auf, wobei das Positionierelement und/oder das Grundelement weitere Einrast- und/oder Befestigungsmittel aufweisen kann, mit welchen die beiden Elemente lösbar aneinander befestigt werden können.

Zur Führung der Bewegung des Abstreifelements in Relation zum Positionierelement und zum Grundelement kann das Abstreifelement ein Führungsmittel aufweisen. Das Führungselement kann beispielsweise als in Richtung des Grundelements überstehender Rand des Abstreifelements ausgestaltet sein, welcher zumindest das Positionierelement ganz oder teilweise umgreift.

Die Vertiefung im Abstreifelement kann topfförmig mit einem im Wesentlichen ebenen Boden oder mit einem nach innen abfallenden Boden, beispielsweise muldenförmig oder konkav, ausgestaltet sein. Die Öffnung im Abstreifelement ist in der Vertiefung angeordnet, wobei die Vertiefung zudem zur Öffnung im Abstreifelement hin abfallend ausgestaltet sein kann.

In einem Ausführungsbeispiel ist die Vorrichtung im Wesentlichen zylinderförmig ausgebildet, wobei die Bewegung zwischen Abstreifelement und Positionierelement eine Drehbewegung ist.

In einem weiteren Ausführungsbeispiel ist die Vorrichtung im Wesentlichen quaderförmig ausgebildet, wobei die Bewegung zwischen Abstreifelement und Positionierelement eine lineare Bewegung ist.

In einem weiteren Ausführungsbeispiel weist das Grundelement mehrere zueinander parallel angeordnete Reihen von Aufnahmen auf. Ein so konzipiertes Grundelement ist vorteilhaft für Reihenuntersuchungen.

In einem weiteren Ausführungsbeispiel kann das Grundelement auf beiden Seiten zwei oder mehr Aufnahmen aufweisen. Vorzugsweise sind in diesem Fall auf einer Seite Aufnahmen für eine erste Variante von Probengefässen und auf der anderen Aufnahmen für eine weitere Variante von Probengefässen, beispielsweise mit einer anderen Form, einem anderen Durchmesser und/oder einem abweichenden Volumen. Dieses ist vorteilhaft, wenn die Vorrichtung zur Probenvorbereitung für ein Kombigerät, wie zum Beispiel ein Erweichungs- und Tropfpunktgerät eingesetzt werden soll, da für diese Methoden Probengefässe mit unterschiedlichen Durchmessern der Befüll- und Auslass-Öffnungen verwendet werden.

Weiterhin kann die Vorrichtung einen Griff und das Grundelement ein Befestigungsmittel zur Befestigung des Griffs aufweisen. Die Vorrichtung, genauer das Grundelement kann mit dem Griff verbunden werden, welcher beispielsweise dazu dient die Vorrichtung im Labor zu transportieren oder in einen Ofen, eine Kühlvorrichtung, einen Kühlschrank, einen Klimaschrank oder vergleichbare Vorrichtungen einzubringen oder zu entfernen. Auf diese Weise kann die Vorrichtung vor dem Befüllen mit einer Substanz oder Probe abgekühlt oder erwärmt werden oder diese nach dem Befüllen auf eine für die Messung geeignete Starttemperatur gebracht werden. Dieses ist insbesondere vorteilhaft, um die Probengefässe vollständig, vorzugsweise ohne Luft- oder Gaseinschlüsse, mit eine Substanz befüllen zu können oder auch um das Verhalten von Proben beim Erwärmen ausgehend von Starttemperaturen unterhalb deren Erstarrungstemperatur zu untersuchen.

Ferner kann die Vorrichtung einen Kompressionsstempel zum Komprimieren der im Probengefäss befindlichen Substanz aufweisen. Der Kompressionsstempel ermöglicht einerseits das gleichförmige und/oder schichtweise Befüllen der Probengefässe und kann zudem dazu verwendet werden die einzelnen Schichten und/oder die gesamte Substanz nach dem Einfüllen im Probengefäss zu komprimieren, so dass für eine zu analysierende Substanz im Wesentlichen gleichförmig befüllte Probengefässe mit im Wesentlichen gleicher Substanzmenge und im Wesentlichen gleicher Packdichte erzeugt werden können.

Die Öffnung im Abstreifelement kann als Bohrung mit einer vorgegeben Höhe ausgeführt sein, also eine Art Bohrkanal umfassen. Die Höhe der Bohrung, genauer des Bohrkanals, ist vorzugsweise so gewählt, dass beim Befüllen das locker in das Probengefäss gefüllte Substanzvolumen zusammen mit dem in der Bohrung überstehenden Substanzvolumen nach der Komprimierung mit dem Kompressionsstempel oder einem anderen Hilfsmittel das Probengefäss ausfüllt. Auf diese Weise kann das Abstreifelement als Dosierhilfe wirken.

In einem weiteren Ausführungsbeispiel sind das Positionierelement und das Grundelement einstückig ausgebildet.

Die erfindungsgemässe Vorrichtung ist für die Befüllung von Probengefässen mit pulverigen Substanzen besonders geeignet. Ferner kann die Vorrichtung auch mit anderen Abstreifelementen verwendet werden. Die Substanz kann beispielsweise direkt in die vom Positionierelement gehaltenen Probengefässe eingefüllt werden und anschliessend kann überstehende Substanz mit einem geeigneten Abstreifelement, wie beispielsweise einem Spatel durch dessen Bewegung über die Abstreiffläche abgestreift werden.

Weiterhin betrifft die Erfindung ein Verfahren zum Befüllen eines Probengefässes mit der erfindungsgemässen Vorrichtung. Das Verfahren umfasst das Bereitstellen von mindestens zwei Probengefässen, welche je eine Befüllöffnung aufweisen, und das Bereitstellen einer zu untersuchenden Substanz. Jedes Probengefäss wird in jeweils eine Aufnahme des Grundelements eingesetzt, das Positionierelement wird auf die Probengefässe aufgelegt und das Abstreifelement auf das Positionierelement aufgesetzt. Anschliessend wird eine erste Position zwischen Abstreifelement und Positionierelement eingestellt, so dass die Öffnung im Abstreifelement in Deckung mit einer der Durchführungen im Positionierelement und der Befüllöffnung eines der Probengefässe ist, so dass das Probengefäss mit der bereitgestellten Substanz befüllt werden kann. Anschliessend gleitet durch die Weiterführung der Bewegung des Abstreifelements in Relation zum Positionierelement die Öffnung im Abstreifelement über die Oberfläche der Substanz im Probengefäss und über die Abstreiffläche, wodurch überstehende Substanz abgestreift wird.

Das Verfahren kann weiterhin einen Schritt des Verdichtens der Substanz im Probengefäss umfassen.

Verschiedene Ausführungsvarianten der erfindungsgemässen Vorrichtung zum Befüllen von Probengefässen werden anhand der folgenden Figuren näher beschrieben, wobei gleiche Elemente mit denselben Bezugszeichen versehen sind. Es zeigen:
- Fig. 1: eine dreidimensionale Explosionszeichnung eines ersten Ausführungsbeispiels einer Vorrichtung zum Befüllen von Probengefässen;
- Fig. 2: eine dreidimensionale Ansicht eines weiteren Ausführungsbeispiels einer Vorrichtung zum Befüllen von Probengefässen;
- Fig. 3: einen Schnitt durch die Vorrichtung gemäss Figur 1 mit eingesetzten Probengefässen;
- Fig. 4: einen Schnitt durch die Vorrichtung gemäss Figur 2 mit eingesetzten Probengefässen;
- Fig. 5: eine dreidimensionale Ansicht eines Positionierelements für eine erfindungsgemässe Vorrichtung zum Befüllen von Probengefässen;
- Fig. 6: eine dreidimensionale Ansicht eines weiteren Positionierelements für eine erfindungsgemässe Vorrichtung zum Befüllen von Probengefässen;
- Fig. 7: eine dreidimensionale Ansicht eines weiteren Positionierelements für eine erfindungsgemässe Vorrichtung zum Befüllen von Probengefässen;
- Fig. 8: eine dreidimensionale Ansicht einer weiteren Vorrichtung zum Befüllen von Probengefässen, welche linear ausgestaltet ist;
- Fig. 9: eine dreidimensionale Explosionsansicht einer weiteren Vorrichtung zum Befüllen von Probengefässen, welche matrixartig ausgestaltet ist.

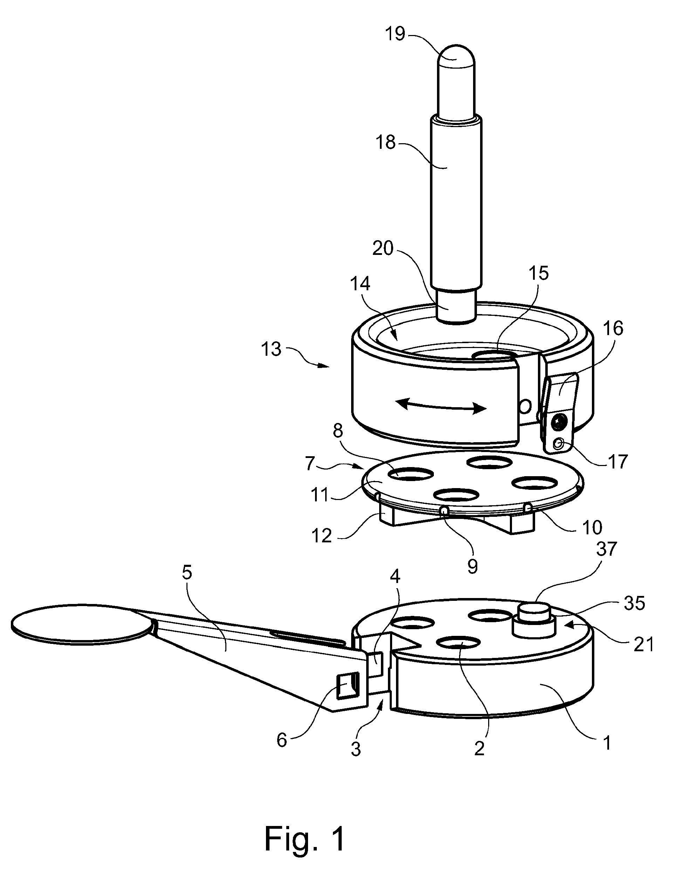

Figur 1 zeigt eine dreidimensionale Explosionsansicht einer erfindungsgemässen Vorrichtung zum Befüllen von Probengefässen. Die Vorrichtung umfasst ein Grundelement 1, welches hier im Wesentlichen scheibenförmig ausgestaltet ist. Das Grundelement 1 weist zumindest auf einer Seite mindestes zwei Aufnahmen 2, hier sind vier gezeigt, für Probengefässe 21 auf.

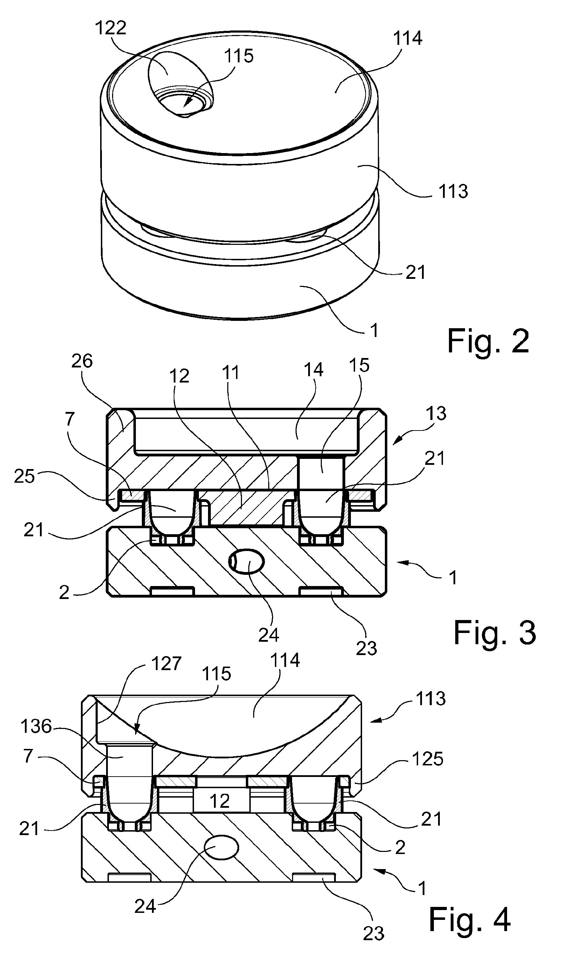

In einem weiteren Ausführungsbeispiel (s. Figur 3) kann das Grundelement 1 auch auf beiden Seiten zwei oder mehr Aufnahmen 2 aufweisen. Vorzugsweise sind in diesem Fall auf einer Seite Aufnahmen 2 für eine erste Variante von Probengefässen und auf der anderen Aufnahmen 2 für eine weitere Variante von Probengefässen. Dieses ist vorteilhaft, wenn die Vorrichtung zur Probenvorbereitung für ein Kombigerät, wie ein Erweichungs- und Tropfpunktgerät eingesetzt werden soll. Beispielhaft ist hier ein Probengefäss 21 gezeigt.

Weiterhin weist das in Figur 1 gezeigte Grundelement 1 einen Einschnitt 3 mit einem ersten Haltemittel 4 auf. Der Einschnitt 3 und das Haltemittel 4 dienen zur Befestigung eines Griffs 5 am Grundelement 1. Der Griff 5 ist so ausgestaltet, dass er in das Haltemittel 4 einfach einrastet und auch leicht wieder entfernt werden kann. Dazu weist der Griff 5 ein passendes zweites Haltemittel 6 auf.

Die Vorrichtung ist derart ausgestaltet, dass diese mit dem Griff 5 verbunden werden kann, welcher beispielsweise dazu dient die Vorrichtung im Labor zu transportieren oder in einen Ofen, eine Kühlvorrichtung, einen Kühlschrank, einen Klimaschrank oder vergleichbare Vorrichtungen einzubringen oder zu entfernen. Auf diese Weise ist es möglich, die Vorrichtung vor dem Befüllen mit einer Substanz oder Probe abzukühlen oder zu erwärmen oder diese nach dem Befüllen auf eine für die Messung geeignete Starttemperatur zu bringen. Dieses ist beispielsweise für zähflüssige oder feste Proben vorteilhaft, um die Probengefässe vollständig, vorzugsweise ohne Luft- oder Gaseinschlüsse, zu befüllen oder auch um das Verhalten von Proben bei Erwärmen bei Starttemperaturen unterhalb deren Erstarrungstemperatur zu untersuchen.

Weiterhin umfasst die Vorrichtung ein Positionierelement 7, welches ebenfalls im Wesentlichen scheibenförmig ausgestaltet ist. Das Positionierelement 7 weist pro Aufnahme 2 im Grundelement 1 eine Durchführung 8 auf. In der zusammengesetzten Vorrichtung ist jeweils eine Durchführung 8 oberhalb jeder Aufnahme 2 angeordnet, so dass durch die Durchführung 8 ein in der Aufnahme 2 befindliches Probengefäss 21 durch dessen Befüllöffnung 37 befüllt werden kann. Ferner weist das Positionierelement 7 jeweils ein jeder Durchführung 8 zugeordnetes erstes Einrastmittel 9 auf, welches hier als mindestens eine Einkerbung im Rand des Positionselements 7 ausgebildet ist. Zwischen den ersten Einrastmittel 9 ist zudem je ein drittes Einrastmittel 10 angeordnet, welches hier ebenfalls als Einkerbung im Rand des Positionierelements 7 ausgebildet ist. Die dem Grundelement 1 abgewandte Seite des Positionierelements 7 ist als Abstreiffläche 11 ausgebildet und an der dem Grundelement 1 zugewandten Seite hat das Positionierelement 7 eine Positionierhilfe 12, welche hier als kreuzförmige Verstrebung dargestellt ist und dazu dient in der betriebsbereiten Vorrichtung das Positionierelement 7 auf den Probengefässen 21 zu positionieren, so dass der Abschluss zwischen den Probengefässen 21 und den Durchführungen 8 im Wesentlichen spaltfrei und vorzugweise auch dicht ist. Die Oberkanten der Probengefässe 21, welche die Befüllöffnung 37 begrenzt, bilden im betriebsbereiten Zustand im Wesentlichen eine Ebene mit der Abstreiffläche 11.

In dem in Figur 1 gezeigtem Ausführungsbeispiel wird das Positionierelement 7 auf einen umlaufenden Rand 35 der Probengefässe 21 aufgelegt, welche in den Aufnahmen 2 des Grundelements 1 angeordnet sind. Vorzugsweise ist daher die Höhe des Positionierelements 7, insbesondere des scheibenförmiges Teils, auf die Höhe des Probengefässes 21, insbesondere auf den über den umlaufenden Rand 35 herausragenden Teil, angepasst. Selbstverständlich kann das Grundelement 1 und/oder das Positionierelement 7 weitere Einrast- und/oder Befestigungsmittel aufweisen, um die beiden Elemente 1, 7 aneinander zu befestigen.

Ferner umfasst die in Figur 1 gezeigte Vorrichtung ein Abstreifelement 13. Das Abstreifelement 13 weist auf seiner dem Grundelement 1 zugewandten Seite einen im Vergleich zum Boden des Abstreifelement 13 tiefgezogenen oder überstehenden Rand auf (s. a. Figuren 3 und 4), welcher in der zusammengesetzten Vorrichtung das Positionierelement 7 aussen umgreift. Der Boden des Abstreifelements 13 berührt dann die Abstreiffläche 11 und ist im Wesentlichen eben bzw. planar ausgestaltet.

Das Abstreifelement 13 weist zudem an seiner dem Grundelement 1 abgewandten Seite eine muldenförmige Vertiefung 14 auf. Weiterhin befindet sich im Boden des Abstreifelements 13 eine Öffnung 15, durch die jeweils ein im Grundelement 1 angeordnetes Probengefäss 21 mit einer Substanz befüllt werden kann. Dazu kann die Substanz zunächst in die muldenförmigen Vertiefung 14 eingefüllt werden und anschliessend mit einem geeigneten Hilfsmittel, beispielsweise einem handelsüblichen Spatel zur und durch die Öffnung 15 geschoben werden. Die muldenförmigen Vertiefung 14 weist hier einen trichterförmig abfallenden Boden auf, wobei der tiefste Punkt von der Öffnung 15 beabstandet ist. Verschiedene Ausgestaltungen der Vertiefung sind beispielhaft in den Figuren 2, 3 und 4 gezeigt.

Weiterhin ist am Abstreifelement 13 ein zweites Einrastmittel 16 befestigt, welches hier als Federelement mit einer Blattfeder und einer nach innen gerichteten Ausbuchtung 17 als zweites Einrastmittel ausgestaltet ist. Die Ausbuchtung 17 ist so angeordnet, dass diese bei einer Bewegung des Abstreifelements 13 in Relation zum Positionierelement 7 und zum Grundelement 1, wie es durch den Pfeil angedeutet ist, in die ersten oder dritten Einrastmittel 9, 10 einrasten kann und so die Position der Öffnung 15 einstellt. Beim Einrasten in ein erstes Einrastmittel 9 wird die Öffnung 15 über einer der Durchführungen 8 angeordnet, so dass das zugehörige Probengefäss 21 durch die Befüllöffnung 37 gefüllt werden kann. Bei der Bewegung vom ersten Einrastmittel 9 zu einem dritten Einrastmittel 10, bewegt sich die Öffnung 15 über die Abstreiffläche 11, wodurch überstehende Substanz vom Probengefäss 21 abgestreift werden kann. Beim Einrasten in ein drittes Einrastmittel 10 sind alle Durchführungen 8 verschlossen. Eine Weiterführung der Bewegung führt zum Einrasten des zweiten Einrastmittels 17 in ein weiteres erstes Einrastmittel 9, wodurch das nächste Probengefäss befüllt werden kann.

Das als Federelement, insbesondere als Blattfeder, ausgestaltete Einrastmittel 16 dient zudem dazu, das Positionierelement 7 mit dem Abstreifelement 13 zu koppeln oder zu entkoppeln, indem eine Kraft auf die Blattfeder einwirkt oder gelöst wird. Die Krafteinwirkung kann insbesondere manuell durch Drücken auf den in dieser Ansicht oberen Teil der Blattfeder erfolgen.

Zum gleichmässigen und/oder gleichförmigen Befüllen der Probengefässe kann die Vorrichtung weiterhin einen Kompressionsstempel 18 aufweisen, welcher ein erstes abgerundetes Ende 19 und ein zweites abgeflachtes Ende 20 hat. Die Form des Kompressionstempels 18 sollte sowohl an die Art und Beschaffenheit der Substanz als auch an die Form des Probengefässes 21 angepasst sein, so dass die Substanz mit dem abgerundeten Ende 19 beispielsweise schichtweise in das Probengefäss eingebracht und mit dem abgeflachten Ende komprimiert oder verdichtet werden kann. Die Verwendung eines Kompressionstempels ist insbesondere für pulverförmige oder zähflüssige Substanzen vorteilhaft. Flüssige Substanzen können beispielsweise mit einer Spritze, einer Pipette oder einem anderen geeigneten Gefäss in das in der Vorrichtung befindliche Probengefäss eingebracht werden.

Figur 2 zeigt ein weiteres Ausführungsbeispiel der erfindungsgemässen Vorrichtung im zusammengesetzten, betriebsbereiten Zustand. Die Vorrichtung ist hier ohne Griff dargestellt. In Figur 2 ist das Grundelement 1 mit darin angeordneten Probengefässen 21 und ein Abstreifelement 113 mit einer Vertiefung 114 und einer Öffnung 115 zu sehen. Die Vertiefung 114 ist im Wesentlichen konkav sowie ecken- und kantenfrei gestaltet, so dass sich in der Vertiefung 114 verbleibende Substanz nicht darin absetzen kann. Diese Ausgestaltung ist besonders reinigungsfreundlich. Die Öffnung 115 ist am Rand der Vertiefung 114 angeordnet und als Einschnitt in das Abstreifelements 113 ausgebildet, so dass die Öffnung 115 nach aussen durch einen Wandabschnitt 122 begrenzt wird, welcher zudem verhindert, dass Substanz beim Befüllen der Probengefässe 21 über den Rand der Vertiefung 114 hinaus geschoben werden kann. Das gezeigte Abstreifelement 113 kann ebenfalls mit einem in Figur 1 gezeigten zweiten Einrastmittel ausgestattet sein.

Figur 3 zeigt einen Schnitt durch die Vorrichtung gemäss Figur 1 mit dem Grundelement 1, dem Positionierelement 7, dem Abstreifelement 13 und in der Vorrichtung angeordneten Probengefässen 21.

Im Grundelement 1 sind sowohl die Aufnahmen 2 als auch in der gegenüberliegenden Seite des Grundelements 1 angeordnete Aufnahmen 23 gezeigt, welche für weitere Probengefässe, beispielsweise mit einem grösseren Durchmesser geeignet sind. Das Grundelement 1 ist daher so ausgebildet, dass es in zwei Ausrichtungen in der Vorrichtung verwendet werden kann. Weiterhin ist im Grundelement 1 eine Bohrung 24 zu erkennen, welche zur Aufnahme eines Messfühlers, insbesondere eines Temperaturfühlers dient, so dass die Temperatur direkt im Inneren der Vorrichtung erfasst werden kann.

Die Probengefässe 21 sind so in den Aufnahmen 2 angeordnet, dass der Auslass durch den Boden der Aufnahme 2 begrenzt und verschlossen wird, so dass die Substanz beim Befüllen nicht direkt wieder aus dem Probengefäss austreten kann, insbesondere für Gefässe für die Bestimmung des Tropf- oder Erweichungspunkts. Die Probengefässe 21 werden durch das Positionierelement 7 in den Aufnahmen 2 zentriert und positioniert. Das Positionierelement 7 weist hier eine kreuzförmige Positionierhilfe 12 auf. Auf der Abstreiffläche 11 des Positionierelements 7 liegt das Abstreifelement 13 auf, wobei das Positionierelement 7 einen im Vergleich zum Grundelement 1 und zum Abstreifelement 13 kleineren Durchmesser hat.

Das Abstreifelement 13 umfasst das Positionierelement 7 mit einem überstehenden, umlaufenden Rand 25, welcher zudem als Führung für die Bewegung des Abstreifelements 13 in Relation zum Positionierelement 7 und zum Grundelement dient. Der umlaufenden Rand 25 ist vorzugsweise umlaufend, kann jedoch auch unterbrochen ausgestaltet sein. Auf seiner dem Grundelement 1 abgewandten Seite weist das Abstreifelement 13 die muldenförmige Vertiefung 14, welche hier einen im Wesentlichen ebenen Boden hat, und die Öffnung 15 auf. Die muldenförmige Vertiefung 14 wird ebenfalls von einem umlaufenden Rand 26 begrenzt.

Figur 4 zeigt einen Schnitt durch die Vorrichtung gemäss Figur 2 mit im Wesentlichen denselben Merkmalen wie Figur 3. Die Vertiefung 114 ist hier konkav ausgestaltet und die Öffnung 115 ist nach aussen durch einen Wandabschnitt 127 begrenzt, welcher als Einfüllhilfe dient. Die Öffnung 115 kann, wie in Figur 4 gezeigt, so ausgestaltet sein, dass diese eine Bohrung mit einem an die Öffnung 115 anschliessenden Kanal oder Bohrkanal 136 ist. Die Höhe des Kanals 136 und damit die Bodendicke des Abstreifelements 113 wird vorzugsweise so gewählt, dass eine Substanzmenge, welche locker in das Probengefäss 21 und den Kanal 136 eingefüllt wurde, nach Kompression das Probengefäss 21 ausfüllt. Die Höhe des Kanals 136 dient somit zur reproduzierbaren Befüllung der Probengefässe 21.

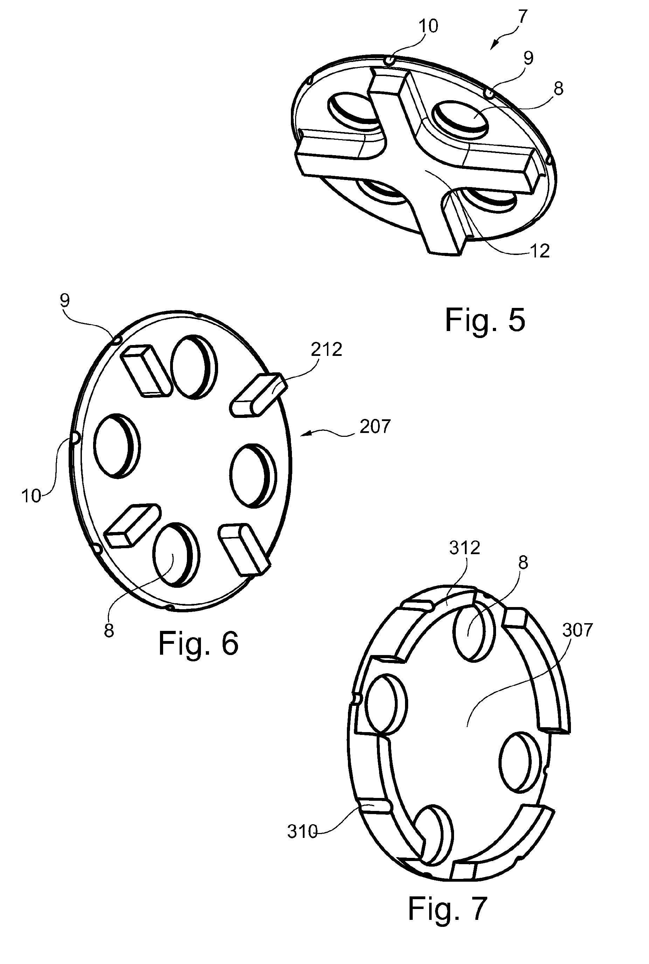

Die Figuren 5 bis 7 zeigen dreidimensionale Ansichten unterschiedlicher Ausgestaltungen des Positionierelements.

Figur 5 zeigt das Positionierelement 7 gemäss Figur 1 mit einer kreuzförmigen Positionierhilfe 12, vier Durchführungen 8 sowie ersten- und dritten Einrastmitteln 9, 10.

Figur 6 zeigt ein weiteres Positionierelement 207, welches anstelle der kreuzförmigen Positionierhilfe eine aus mehreren Teilen bestehende Positionierhilfe 212 umfasst. Jeweils ein Teil der Positionierhilfe 212 ist hier zwischen zwei Durchführungen 8 angeordnet.

Figur 7 zeigt ein weiteres Positionierelement 307, welches ebenfalls eine mehrteilige Positionierhilfe 312 umfasst. Die Teile der Positionierhilfe 312 sind entlang des Aussenrands des Positionierelements 307 angeordnet und sind bogenförmig ausgebildet. Jedes Teil ist hier zwischen zwei Durchführungen 8 angeordnet und weist ein drittes Einrastmittel 10 auf.

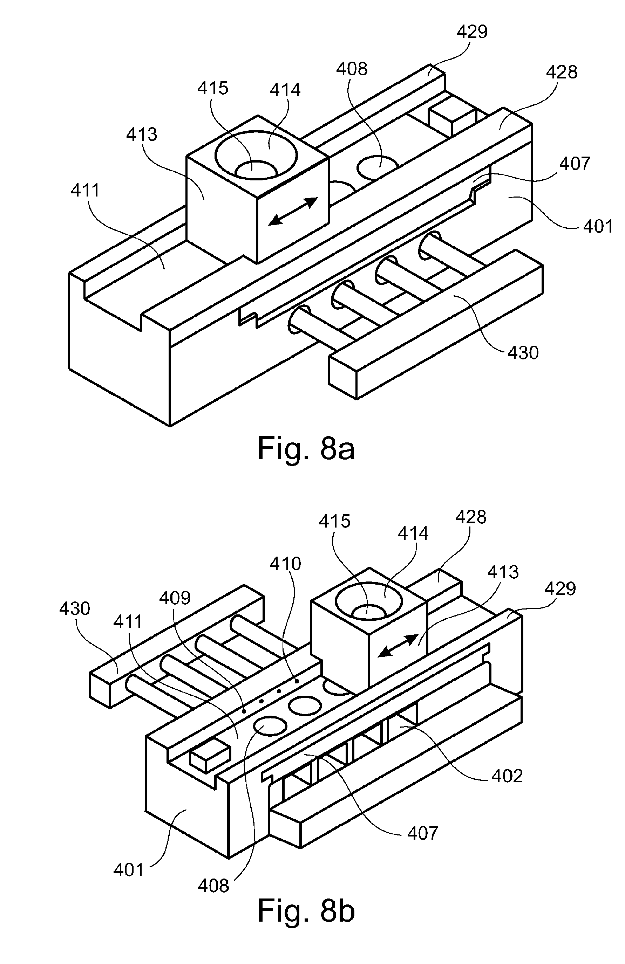

Figur 8a und 8b zeigen dreidimensionale Ansichten eines weiteren Ausführungsbeispiels der erfindungsgemässen Vorrichtung, welches linear aufgebaut ist. Die Vorrichtung umfasst ein Grundelement 401, ein Positionierelement 407 und ein Abstreifelement 413.

Das Grundelement 401 ist in diesem Beispiel im Wesentlichen ein quaderförmiger Materialblock, welcher mindestens zwei, hier vier, kanalartige Aufnahmen 402 für Probengefässe (hier nicht gezeigt) umfasst. Über den kanalartigen Aufnahmen 402 befindet sich ein Einschub für das Positionierelement 407, welches je eine mit jeweils einer Aufnahme 402 korrespondiere Durchführung 408 umfasst, die in einer Abstreiffläche 411 liegen.

Das Grundelement 401 weist ferner an seiner Oberseite zwei parallel angeordnete, nach oben vorstehende Ränder auf, welche als Führungsschienen 428, 429 für das Abstreifelement 413 dienen.

Das Abstreifelement 413 kann zwischen den Führungsschienen 428, 429 linear bewegt werden, so dass eine Öffnung 415 im Abstreifelement 413 zur Befüllung der Probengefässe mit jeweils einer Aufnahme 402 und einer Durchführung 408 in Deckung gebracht werden kann. Die Öffnung 415 weitet sich nach oben zu einer muldenförmigen Vertiefung 414 aus, welche sich trichterförmig zur Öffnung 415 hin verjüngt.

Nach dem Befüllen können die Probengefässe mit einem zugehörigen Einfach- oder Mehrfachstempel 430, hier ist ein Vierfach-Stempel gezeigt, aus den Aufnahmen 402 herausgeschoben werden.

Zur Positionierung des Abstreifelements 413 sind an einer und/oder beiden Führungsschienen 428, 429 erste Einrastmittel 409 vorgesehen, welche mit einem am Abstreifelement 413 angebrachten zweiten Einrastmittel (hier nicht zu sehen) zusammenwirken. Weiterhin können auch dritte Einrastmittel 410 an einer und/oder beiden Führungsschienen 428, 429 für jede Durchführung 408 ausgebildet sein.

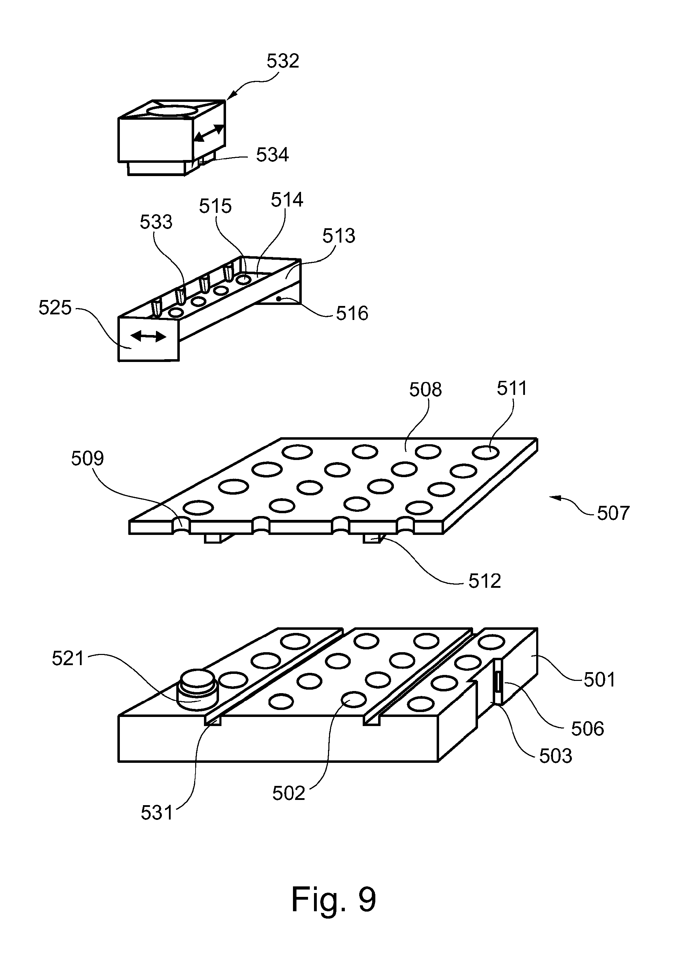

Figur 9 zeigt eine Explosionsdarstellung eines weiteren Ausführungsbeispiels der erfindungsgemässen Vorrichtung, welche zur Befüllung von matrixartig angeordneten Probengefässen 521 ausgestaltet ist.

Die Vorrichtung besteht aus einem plattenförmigen Grundelement 501, welches an einer Kante einen Einschnitt 503 mit einem ersten Haltemittel 506 für einen Griff umfasst. Auf mindestens einer Seite des Grundelements 501 sind eine Vielzahl von Aufnahmen 502 für Probengefässe in regelmässigen Reihen und Spalten, anders ausgedrückt matrixartig, angeordnet. Auch in diesem Beispiel kann das Grundelement 501 auf zwei gegenüberliegenden Seiten Aufnahmen für verschiede Probengefässe umfassen.

Weiterhin hat die Vorrichtung ein Positionierelement 507 mit einer Anzahl von Durchführungen 508 welche der Zahl der Aufnahmen 502 entspricht. Auf der dem Grundelement 501 zugewandten Seite weist das Positionierelement 507 eine Positionierhilfe 512 auf, welche in Form von parallel zueinander angeordneten Stegen ausgebildet sind. Zur Positionierung des Positionierelements 507 gegenüber dem Grundelement 501 weist das Grundelement 501 zudem mit den Stegen 512 korrespondierende Furchen 531 auf, in welchen diese geführt sind. Das Positionierelement 507 weist zudem erste Einrastmittel 509 auf, hier eines für jede Reihe von Aufnahmen 502 bzw. Durchführungen 508.

Die Vorrichtung umfasst ferner ein Abstreifelement 513, welches in Form einer Brücke eine Reihe von Aufnahmen 502 überspannt. Die Aussenkanten 525 des Abstreifelements 513 reichen im zusammengesetzten Zustand der Vorrichtung über die Kante des Positionierelements 507, so dass das Abstreifelement 513 bei der durch den Doppelpfeil angedeuteten Bewegung in Relation zum Positionierelement 507 und zum Grundelement 501 geführt wird. An den Aussenkanten 525 ist mindestens ein zweites Einrastmittel 516 angeordnet, welches bei einer Bewegung des Abstreifelements 513 in die ersten Einrastmitteln 509 einrasten und so das Abstreifelement 513, insbesondere die Öffnungen 515, mit einer Reihe von Durchführungen 508 des Positionierelements 507 in Deckung bringt.

Das Abstreifelement 513 weist eine Anzahl an Öffnungen 515 auf, welche der Zahl von Aufnahmen 508 pro Reihe entsprechen, und in einer Reihe angeordnet sind. Ferner hat das Abstreifelement 513 eine muldenförmige Vertiefung 514. Auf diese Weise kann mit dem Abstreifelement 513 gleichzeitig eine Reihe von Probengefässen 521 befüllt werden, bevor das Abstreifelement 513 um eine Reihe verschoben wird.

Zusätzlich kann die Vorrichtung ein zusätzliches Dosiermittel 532 umfassen, welches im Wesentlichen dem in den Figuren 8a und 8b gezeigten Abstreifelement entspricht. Das Dosiermittel 532 kann auf das Abstreifelement 513 aufgesetzt und entlang der Reihe von Öffnungen 515 verschoben werden, so dass immer nur ein einzelnes Probengefäss befüllt werden kann. Vorzugsweise umfasst bei dieser Ausgestaltung das Abstreifelement 513 für jede Öffnung 515 ein weiteres erstes Einrastmittel 533 und das Dosiermittel 532 ein weiteres zweites Einrastmittel 534.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Bezugszeichenliste

| | |
|---|---|
| 1, 401, 501 | Grundelement |
| 2, 402, 502 | Aufnahme für Probengefäss |
| 3, 503 | Einschnitt |
| 4 | erstes Haltemittel |
| 5 | Griff |
| 6, 506 | zweites Haltemittel |
| 7, 207, 307, 407, 507 | Positionierelement |
| 8, 408, 508 | Durchführung |
| 9, 509 | erstes Einrastmittel |
| 10 | drittes Einrastmittel |
| 11, 411, 511 | Abstreiffläche |
| 12, 212, 312, 512 | Positionierhilfe |
| 13, 113, 413, 513 | Abstreifelement |
| 14, 114, 414, 514 | Vertiefung |
| 15, 115, 415, 515 | Öffnung |
| 16, 516 | zweites Einrastmittel |
| 17 | Ausbuchtung |
| 18 | Kompressionsstempel |
| 19 | erstes Ende |
| 20 | zweites Ende |
| 21, 521 | Probengefäss |
| 122 | Wandeinschnitt |
| 23 | Aufnahme |
| 24 | Bohrung |
| 25, 125 | Rand |
| 26, 126 | Rand |
| 127 | Wandabschnitt |
| 428 | Führungsschiene |
| 429 | Führungsschiene |
| 430 | Mehrfachstempel |
| 525 | Aussenkante |
| 531 | Furche |
| 532 | Dosiermittel |
| 533 | erstes Einrastmittel |
| 534 | zweites Einrastmittel |
| 35 | Rand |
| 136 | Kanal |
| 37 | Befüllöffnung |

## Patentansprüche

1. Vorrichtung zur Befüllung von Probengefässen für die Thermoanalyse mit einer Substanz, umfassend
ein Grundelement (1, 401, 501) mit mindestens zwei Aufnahmen (2, 405, 502) für je ein Probengefäss (21, 521) mit einer Befüllöffnung (37);
ein Abstreifelement (13, 113, 413, 513) mit mindestens einer Öffnung (15, 115, 415,515);
ein Positionierelement (7, 207, 307, 407, 507), welches zwischen dem Grundelement (1, 401, 501) und dem Abstreifelement (13, 113, 413, 513) angeordnet ist und eine planare Abstreiffläche (11, 411, 511) und mindestens zwei Durchführungen (8, 408, 508) umfasst;
wobei im betriebsbereiten Zustand die Durchführungen (8, 408, 508) jeweils ein Probengefäss (21, 521) an einem Ende im Wesentlichen spaltfrei umschliessen und die Abstreiffläche (11, 411, 511) und die Oberkanten der Probengefässe (21, 521) im Wesentlichen in einer gemeinsamen horizontalen Ebene angeordnet sind;
wobei die Vorrichtung zur Befüllung von Probengefässen im betriebsbereiten Zustand derart ausgestaltet ist, dass durch eine Bewegung des Abstreifelements (13, 113, 413, 513) in Relation zum Positionierelement (7, 207, 307, 407, 507) die Befüllöffnung (37) des mindestens einen Probengefässes (21, 521) zur Befüllung mit der Öffnung (15, 115, 415, 515) im Abstreifelement (13, 113, 413, 513) in Deckung gebracht wird, und dass die Öffnung (15, 115, 415, 515) im Abstreifelement (13, 113, 413, 513) überstehende Substanz eines befüllten Probengefässes (21, 521) bei der weiteren Bewegung über die Befüllöffnung (37) des Probengefässes (21, 521) und die Abstreiffläche (11, 411, 511) abstreift.

2. Vorrichtung gemäss Anspruch 1, **dadurch gekennzeichnet, dass** die Vorrichtung mindestens ein erstes Einrastmittel (9, 533) umfasst, welches mindestens einer der Durchführungen (8, 408, 508) im Positionierelement (7, 207, 307, 407, 507) zugeordnet ist, und dass das Abstreifelement (13, 113, 413, 513) ein zweites Einrastmittel (16, 534) umfasst, wobei das zweite Einrastmittel (16, 516) bei der Bewegung des Abstreifelements (13, 113, 413, 513) in Relation zum Positionierelement (7, 207, 307, 407, 507) in eines der ersten Einrastmittel (9, 509) einrastet, wodurch die Befüllöffnung (37) des Probengefässes (21, 521) zur Befüllung mit der Öffnung (15, 115, 415, 515) im Abstreifelement (13, 113, 413, 513) in Deckung gebracht wird.

3. Vorrichtung gemäss Anspruch 2, **dadurch gekennzeichnet, dass** das zweite Einrastmittel (16) ein Federelement umfasst, welches eine mechanische Ankopplung oder Abkopplung des Positionierelements (7, 207, 307, 407, 507) an das Abstreifelement (13, 113, 413, 513) bewirkt.

4. Vorrichtung gemäss Anspruch 2 oder 3, **dadurch gekennzeichnet, dass** das Positionierelement (7) mindestens ein drittes Einrastmittel (10) umfasst, welches zwischen zwei ersten Einrastmitteln (9) angeordnet ist, wobei das Einrasten des dritten und zweiten Einrastmittels (10, 16) die Einstellung einer Neutralstellung bewirkt.

5. Vorrichtung gemäss einem der Ansprüche 1 bis 4, **dadurch gekennzeichnet, dass** das Abstreifelement (13, 113, 413, 513) eine Vertiefung (14, 114, 414, 514) für die einzufüllende Substanz umfasst, in welcher die Öffnung (15, 115, 415, 515) des Abstreifelements angeordnet ist.

6. Vorrichtung gemäss einem der Ansprüche 1 bis 5, **dadurch gekennzeichnet, dass** die Vorrichtung aus einem chemisch resistenten Material besteht und/oder eine chemisch resistente Beschichtung umfasst.

7. Vorrichtung gemäss einem der Ansprüche 1 bis 6, **dadurch gekennzeichnet, dass** das Positionierelement (7, 207, 307, 407, 507) eine Positionierhilfe (12, 212, 312, 512) umfasst, welche das Positionierelement (7, 207, 307, 407, 507) im betriebsbereiten Zustand auf den Probengefässen (21, 521) positioniert.

8. Vorrichtung gemäss einem der Ansprüche 1 bis 7, **dadurch gekennzeichnet, dass** das Abstreifelement (13, 113, 413, 513) ein Führungsmittel umfasst, welches die Bewegung des Abstreifelements (13, 113, 413, 513) in Relation zum Positionierungselement (7, 207, 307, 407, 507) führt.

9. Vorrichtung gemäss einem der Ansprüche 1 bis 8, **dadurch gekennzeichnet, dass** die Vorrichtung im Wesentlichen zylinderförmig ausgebildet ist und dass die Bewegung zwischen Abstreifelement (13, 113, 513) und Positionierelement (7, 207, 307, 507) eine Drehbewegung ist.

10. Vorrichtung gemäss einem der Ansprüche 1 bis 8, **dadurch gekennzeichnet, dass** die Vorrichtung im Wesentlichen quaderförmig ausgebildet ist und dass die Bewegung zwischen Abstreifelement (413, 513) und Positionierelement (407, 507) eine lineare Bewegung ist.

11. Vorrichtung gemäss einem der Ansprüche 1 bis 10, **dadurch gekennzeichnet, dass** das Grundelement (501) mehrere zueinander parallel angeordnete Reihen von Aufnahmen (502) umfasst.

12. Vorrichtung gemäss einem der Ansprüche 1 bis 11, **dadurch gekennzeichnet, dass** die Vorrichtung ferner einen Griff (5) und ein Befestigungsmittel (4) zur Befestigung des Griffs (5) umfasst.

13. Vorrichtung gemäss einem der Ansprüche 1 bis 12, **dadurch gekennzeichnet, dass** die Vorrichtung ferner einen Kompressionsstempel (18) zum Komprimieren der im Probengefäss (21) befindlichen Substanz umfasst.

14. Verfahren zur Befüllung eines Probengefäss (21, 521) mit einem Vorrichtung gemäss einem der Ansprüche 1 bis 13, welches die folgenden Schritte umfasst:
Bereitstellen von mindestens zwei Probengefässen (21, 521), welche jeweils eine Befüllöffnung (37) umfassen;
Bereitstellen einer zu analysierenden Substanz;
Einsetzen der Probengefässe (21, 521) in jeweils eine Aufnahme (2, 402, 502) des Grundelements (1, 401, 501);
Auflegen des Positionierelements (7, 407, 507) auf die Probengefässe (21, 521);
Aufsetzen des Abstreifelements (13, 413, 513), welches ein Öffnung (15, 415, 515) umfasst;
Einstellen einer ersten Position zwischen Abstreifelement (13, 413, 513) und Positionierelement (7, 407, 507), so dass die Öffnung (15, 415, 515) im Abstreifelement in Deckung mit einer der Durchführungen (8) im Positionierelement und der Befüllöffnung (37) eines der Probengefässe (21, 521) ist;
Befüllen des Probengefässes (21, 521) mit der bereitgestellten Substanz; Einstellen einer zweiten Position durch eine Bewegung des Abstreifelements (13, 413, 513) in Relation zum Positionierelement (7, 407, 507), wobei die Öffnung (15, 415, 515) bei der Bewegung über die Oberfläche der Substanz im Probengefäss (21, 521) und die Abstreiffläche (11, 511, 511) gleitet und so die Oberfläche der Substanz abstreift.

15. Verfahren gemäss Anspruch 14, **dadurch gekennzeichnet, dass** dieses ferner einen Schritt des Verdichtens der Substanz im Probengefäss umfasst.
